# EUROPEAN PATENT APPLICATION

(11) **EP 4 538 578 A2**
(43) Date of publication of application: **16.04.2025**
(21) Application number: 25160530.9
(22) Date of filing: 03.03.2023
(51) Int. Cl.: F16L 59/18

(54) **COUPLING FOR A DOUBLE-WALLED PIPE WITH LOW HEAT INGRESS**

(62) Divisional of application: 23159912.7
(71) Applicant: AIRBUS Operations GmbH, 21129 Hamburg (DE); Airbus Operations Limited, Bristol BS34 7PA (GB)
(72) Inventor: Schmidt, Lennart, 21129 Hamburg (DE); Knobloch, Jens-Peter, 21129 Hamburg (DE); Kedor, Florian, 21129 Hamburg (DE); Nguyen, Tran Quang Tue, 21129 Hamburg (DE); Phillips, Samuel, Bristol BS34 7PA (GB)
(74) Representative: Schornack, Oliver

(57) **Abstract**

The present disclosure relates to a coupling (400) for a double-walled pipe having an inner wall (50) and an outer wall (60), the inner wall (50) having an inner lumen (51), and the inner wall (50) and the outer wall (60) delimiting an outer lumen (61). The coupling comprises a pair of inner couplings (119), each mounted to a respective inner wall (50), wherein the pair of inner couplings (119) is configured to be coupled one another, and a sleeve (410) configured to cover the inner coupling (119), a portion of the inner wall (50) and a portion of the outer wall (60). The outer wall (60) forms a plurality of circumferentially extending pockets (65), wherein each pair of the plurality of pockets (65) is arranged adjacent to one another in an axial direction of the coupling (400).

## Description

The present disclosure generally relates to a coupling for a double-walled pipe with reduced heat ingress. Specifically, the present disclosure relates to a coupling for a double-walled pipe, wherein the material of the coupling is interrupted in a radial direction multiple times.

In order to contact hot or cold fluids, a pipe is often implemented as a double-walled pipe, i.e. a pipe having an inner lumen radially surrounded by an outer lumen, wherein the outer lumen is used for insulating the inner lumen. For instance, liquid hydrogen is kept at very low temperatures (approximately -253°C). This requires a good insulation of the inner lumen holding the low-temperature hydrogen.

However, such double-walled pipes require couplings or other connecting ports, which usually provide an interruption of the insulation in a radial direction. For instance, if the coupling includes a flange reaching the inner pipe, the flange creates a heat ingress path. Since this may affect the liquid state of the hydrogen, such ingress should be avoided.

It is therefore an object of the present disclosure to provide a coupling for a double-walled pipe having a low heat ingress.

This object is solved by the present invention as defined in the independent claim. Preferred embodiments are defined by the dependent claims.

According to a first aspect to better understand the present disclosure, a coupling for a double-walled pipe comprises an inner section and an outer section. The double-walled pipe has an inner wall and an outer wall, the inner wall having an inner lumen, and the inner wall and the outer wall delimiting an outer lumen. A lumen is a space or cavity of a tubular body. The lumen is delimited by one or more hulls or walls, i.e., the hull or wall encloses a volume. The inner lumen may be employed to hold and/or conduct a fluid, such as a gas or liquid. The outer lumen is provided for insulation purposes. For example, a vacuum may be applied to the outer lumen, as the vacuum has very good insulation capabilities. Alternatively, an inert gas or an insulating material, such as a foam, may be filled into the outer lumen.

The inner section of the coupling forms a passage in fluid communication with the inner lumen. In other words, the inner section is arranged at a longitudinal end of the inner wall, for example, an end where the double-walled pipe is to be connected to another double-walled pipe or the like. The passage of the inner section may have a cross-section of substantially the same (open) area as a cross-section of the inner wall. Thus, the fluid can flow from the inner lumen through the passage without (much) constriction.

The outer section of the coupling is arranged radially adjacent to the inner section. Moreover, a material of the outer section is interrupted in a radial direction multiple times in an area corresponding to a radial range between the inner wall and the outer wall.

A longitudinal direction of the coupling corresponds to a longitudinal direction of the pipe, i.e., an axial direction of the pipe and coupling, which usually coincides with the direction of flow of the fluid through the inner lumen. A radial direction is perpendicular to the longitudinal direction. Usually, a cross-section of the double-walled pipe is in a plane defined by the radial direction. A circumferential direction lies within such plane and is around the longitudinal axis of the pipe.

The material of the outer section being interrupted multiple times in the radial direction means that through the material of the outer section a direct path in the radial direction is not possible. Thus, a heat ingress path is extended compared to a coupling having a continuous material in the radial direction, i.e. being a full block coupling. In order to have a complete interruption of the heat ingress path, the interrupted material should form a through hole in the longitudinal direction, i.e. should completely interrupted the material of the outer section in a cross-section taken along the longitudinal direction.

In an implementation variant, the outer section can comprise one or more pockets forming the interruption of the material of the outer section. A pocket is to be understood as a three-dimensional opening, notch or chamber. Such pocket may have any dimensions in the radial direction, circumferential direction and longitudinal direction. As indicated above, it is preferred that the pocket is open on both sides along the longitudinal direction, in order to avoid a radial heat ingress through material of the outer section. A heat ingress path, hence, can only follow along the sides of the pocket, particularly along a circumferential direction, and in a radial direction only where the pocket has a circumferential end.

In a further implementation variant, the one or more pockets can include an inner pocket and a radially outwardly arranged outer pocket. Thus, the inner and outer pocket form two of the multiple interruptions in the radial direction. A heat ingress path can only lie along the circumferential sides of each of the inner and outer pockets, which significantly increases the heat ingress path.

Alternatively or additionally, the one or more pockets can include a spiral pocket spiralling around a longitudinal direction of the coupling. Thus, when viewing along the longitudinal direction or axial direction and pipe, the pocket spirals in a circumferential direction with increasing diameter.

As a mere example, the spiral pocket has a radial length of less than 360°. Thus, the coupling may be provided with one or more inner and/or outer pockets and one spiral pocket lying radially in the ward or outward to the other pockets.

A further exemplary coupling may include only a spiral pocket having a radial length of more than 360°, such as 405°, 540°, 720°, 1080°, 1125° or more. In other words, the spiral pocket forms a spiral (when viewing in the longitudinal direction) having an overlapping section, there the spiral overlaps itself once, twice, three times, four times or more.

In any case, a spiral pocket allows the heat ingress path only along the corresponding spirally arranged material of the outer section. This leads to a huge increase of the heat ingress path compared to a full block coupling.

In another implementation variant, two or more inner pockets can be arranged adjacent to one another in a circumferential direction. In other words, a circumferential end of one inner pocket is close to a circumferential end of another pocket.

In this case, the coupling can further comprise at least one inner spoke connecting the inner section with the outer section in a radial direction and separating a pair of the two or more inner pockets. In such spoke provides rigidity and stiffness of the coupling, particularly in a radial direction. In addition, when compared to a spiral pocket, the coupling with a spoke is more resistant with respect to warpage or bulging in the longitudinal direction. The heat ingress path may lie along the spoke, but has to circumscribe one of the two or more inner pockets.

In yet another implementation variant, two or more outer pockets can be arranged adjacent to one another in a circumferential direction. In other words, a circumferential end of one outer pocket is close to a circumferential end of another pocket.

As with the two inner pockets and spoke, the coupling can further comprise an outer flange, and at least one outer spoke connecting the outer section with the outer flange in a radial direction and separating a pair of the two or more outer pockets.

In a further implementation variant, the at least one outer spoke can be arranged at a circumferential position deviating from a circumferential position of the at least one inner spoke. In other words, the inner spoke and outer spoke not arranged on a radial line, but are offset on different radial lines, i.e. are offset in circumferential direction. This allows heat ingress path only on a line circumscribing one of the outer pockets, through the outer spoke, circumscribing one of the inner pockets, and through the inner spoke. Thus, the heat ingress path is significantly increased compared to a full block coupling.

In an implementation variant, the coupling can further comprise an insulating barrier arranged in each of the one or more pockets in a fluid tight manner. Irrespective of a pocket along a circumferential line having a continuous radius or a spiral pocket, an insulating barrier can be placed in the pocket and can be fixed therein in a fluid tight manner. The barrier has the same form as the associated pocket. This avoids a fluid connection between both sides of the coupling in a longitudinal direction through the pocket, for example, from the outer lumen of the double-walled pipe to an opposite side of the coupling. Due to the insulating material of the barrier, the heat ingress path will most likely circumscribe the pocket and barrier, as the material of the coupling will have a higher heat propagation than the insulating material.

In a further implementation variant, the one or more pockets can be configured to receive a corresponding outer section of a further coupling. Thus, both couplings (also referred-to as left and right couplings) are of slightly different form. For instance, in radial and circumferential direction the left coupling has an outer section at a position, where the right coupling has a pocket. This allows fitting the left and right coupling into one another, like a Bayonet coupling.

In such variant, each coupling has two pockets along the radial direction, and has further to portions of the inner section fitting into corresponding pockets of the other coupling.

In yet a further implementation variant, the coupling may comprise at least one seal configured to be placed into a pocket. When both couplings are fitted to one another, the seal can be arranged at a longitudinal end of the pocket and a longitudinal end of the associated portion of the inner section. Thus, the seal renders the pocket and inner section portion fluid tight.

In another implementation variant, any of the above couplings can have an outer flange configured to be fastened to another flange of a corresponding coupling. For instance, the outer flange may have one or more through holes, through which a fastener, such as a screw or bolt, can fit. The other flange of a corresponding coupling has corresponding through holes receiving such fastener, so that both couplings can be fixed to one another.

In yet another implementation variant, any of the disclosed couplings can have a circumferentially arranged groove configured to receive a seal. Such seal is squeezed between two corresponding couplings, in order to provide a fluid tight inner space in the coupling, and particularly a fluid tight space for the passage in the inner section. For instance, the coupling can comprise one inner groove at the inner section and one outer groove at the outer section or outer flange, each groove configured to receive a respective seal.

According to a second aspect to better understand the present disclosure, a coupling for a double-walled pipe comprises a pair of inner couplings and a sleeve. The double-walled pipe has an inner wall and an outer wall, the inner wall having an inner lumen, and the inner wall and the outer wall delimiting an outer lumen. The inner lumen may be employed to hold and/or conduct a fluid, such as a gas or liquid. The outer lumen is provided for insulation purposes. For example, a vacuum may be applied to the outer lumen, as the vacuum has very good insulation capabilities. Alternatively, an inert gas or an insulating material, such as a foam, may be filled into the outer lumen.

Each of the pair of inner couplings is mounted to a respective inner wall, wherein the pair of inner couplings is configured to be coupled one another. Thus, the pair of inner couplings is configured to connect two inner pipes of the double-walled pipe. Each of the inner couplings can be configured to provide a fluid tight coupling between the inner pipes.

The sleeve is configured to cover the inner coupling, a portion of the inner wall and a portion of the outer wall. Such sleeve can provide insulation for the inner pipe and the pair of couplings. The sleeve can further provide a continuation of the insulating capabilities of the outer lumen.

This allows a simple coupling of the inner pipes, since the pair of inner couplings can be kept simple. Similar to the insulating capabilities of the outer wall the sleeve provides insulation for the pair of inner couplings.

Furthermore, the outer wall forms a plurality of circumferentially extending pockets, wherein each pair of the plurality of pockets is arranged adjacent to one another in an axially direction of the coupling. Since heat ingress will follow the outer wall even inside of the sleeve, the plurality of pockets increases the length of the outer wall in a longitudinal direction. For instance, when viewing a cross-section along a longitudinal direction, the outer wall has a meandering shape which provides for an increased length of the heat ingress path.

In an implementation variant, the sleeve can comprise an axial extension fitting on the outer wall in a fluid tight manner, and is configured to hold a vacuum and/or an insulation in a space between the sleeve and the portion of the inner wall and the portion of the outer wall including the pockets. The sleeve may be made of a thin rigid material, so that it forms an empty space between the outer wall and the pair of couplings, on the one hand, and the sleeve, on the other hand. Such rigid material should withstand the vacuum or outer pressure acting on the sleeve.

The axial extension fitting can have the form of a tube or hose snugly fit on the outer wall. Optionally, the axial extension fitting may be pressed onto the outer wall by an associated compression ring, belt, collar, clip or bracket, in order to facilitate fluid tightness.

In a further implementation variant, the sleeve can comprise a plurality of circumferentially extending protrusions, wherein each protrusion fills a pocket of the outer wall. For instance, the sleeve and/or the protrusions can be made of an insulating material, such as a multilayer insulation MLI, metalized foils, aerogels, microspheres, a foam or the like. This insulating material can have a form corresponding to the pockets in the outer wall, so that each pocket is filled by the insulating material. Preferably, the insulating material also covers the outer wall between the pockets (when viewing along a longitudinal direction).

In yet a further implementation variant, a cross-section of at least some of the plurality of pockets has a rectangular shape, an omega-shape, a star-shape, a triangular shape, and elliptical shape, and/or a polygonal shape. This cross-section is meant to be along the longitudinal direction. In addition, it is to be understood that each pocket may have its individual shape, all pockets have the same shape, or groups of pockets have respective same shapes. Any of the rectangular shape, omega-shape, star-shape, triangular shape, elliptical shape or polygonal shape increases the length of a line on a surface of the outer wall along the longitudinal direction and, hence, increases a length of the heat ingress path.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
Figure 1 schematically illustrates different views of a first exemplary coupling for a double-walled pipe;
Figure 2 schematically illustrates different views of a second exemplary coupling for a double-walled pipe;
Figure 3 schematically illustrates a perspective view of a cut-out of a third exemplary coupling for a double-walled pipe;
Figure 4 schematically illustrates a cross-sectional view of a fourth exemplary coupling for a double-walled pipe in two states;
Figure 5 schematically illustrates a cross-sectional view of a fifth exemplary coupling for a double-walled pipe, and
Figure 6 schematically illustrates perspective views and corresponding cross sections of an outer wall of the fifth exemplary coupling.

In the following description, for purposes of explanation and not limitation, specific details are set forth in order to provide a thorough understanding of the present disclosure. It will be apparent to one skilled in the art that the present disclosure may be practiced in other implementations that depart from these specific details.

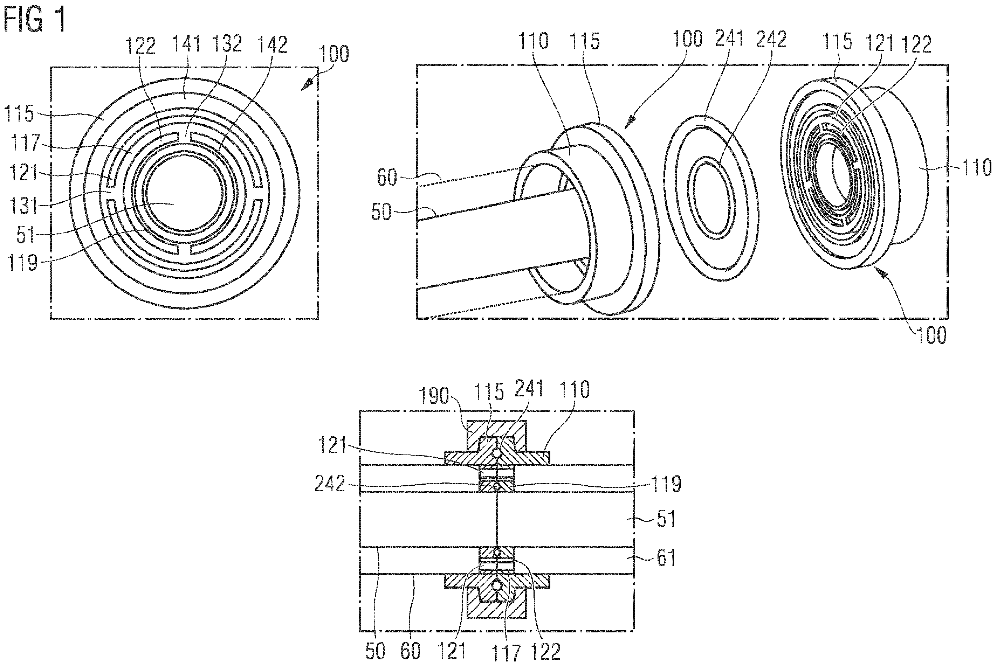

Figure 1 schematically illustrates different views of a first exemplary coupling 100 for a double-walled pipe. The double-walled pipe has an inner wall 50 defining an inner lumen 51, and an outer wall 60, which together with the inner wall 50 delimits an outer lumen 61. Thus, the outer lumen 61 encircles the inner wall 50. The inner lumen 51 can be used to hold and conduct a fluid, such as a gas or liquid. The outer lumen 61 is used to provide insulation to the inner wall 50 and inner lumen 51. As a mere example, the inner lumen 51 can be used to transport a very cold fluid, such as liquid hydrogen, which is insulated by a vacuum applied to the outer lumen 61.

In order to connect two double-walled pipes to one another in a longitudinal direction, two couplings 100 can be mounted to one another face-by-face, as can be derived from the exploded view of the two couplings 100 in Figure 1. The following description is directed to one of these couplings 100, while both couplings 100 have the same shape and structure and correspond to one another.

The exemplary coupling 100 has an inner section 119 forming a passage in fluid communication with the inner lumen 51, and has an outer section 117 arranged radially adjacent to the inner section 119. The inner section 119 may have a rather simple form, such as a ring, which can be connected to the inner wall 50. The inner section 119 can be welded, adhered or otherwise connected to the inner wall 50, so that a fluid tight connection between inner wall 50 and coupling 100 is provided.

The material of the outer section 117 is interrupted in a radial direction multiple times in an area corresponding to a radial range between the inner wall 50 and the outer wall 60. In other words, the outer section 117 comprises one or more pockets 121, 122 forming the interruption of the material of the outer section. Figure 1 shows four pockets arranged along two virtual concentric rings. Specifically, the one or more pockets 121, 122 include an inner pocket 122 and an outer pocket 121 arranged radially outwardly from the inner pocket 122.

The coupling 100 comprises at least one inner spoke 132 connecting the inner section 119 with the outer section 117 in a radial direction. In case of a single pocket, the inner spoke 132 separates the circumferential ends of the inner pocket 122 from one another. In the example illustrated in Figure 1, two inner pockets 122 and two outer pockets 121 are provided. The two inner pockets 122 are arranged adjacent to one another in a circumferential direction. The inner spoke 132 separates a pair of the two or more inner pockets 122. Thus, in the example having two inner pockets 122, two inner spokes 132 are formed at the respective circumferential ends of the two inner pockets 122.

Likewise, the exemplary coupling 100 comprises at least one outer spoke 131 separating circumferential ends of one pocket or separating a pair of two or more outer pockets 121 in a circumferential direction. Each outer spoke 131 connects the outer section 117 with a portion of the coupling being radially outward from the outer section 117. For example, the outer spokes 131 connect the outer section 117 with an outer flange 115 or a tubular portion 110. Such outer flange 115 may have the largest extent in the radial direction. The outer flange 115 and the tubular portion 110 may extend in the radial direction further outward than the outer wall 60.

Furthermore, the at least one outer spoke 131 is arranged at a circumferential position deviating from a circumferential position of the at least one inner spoke 132. In other words, when viewing at the front face of the coupling, a circumferential position of the inner spokes 132 is offset with respect to a circumferential position of the outer spokes 131. Thus, a heat ingress path starting at the outer flange 115 can only go along an outer spoke 131 (in radial direction), along the outer section 117 between inner and outer pockets 121, 122 in the circumferential direction, and along an inner spoke 132 (in radial direction again) before reaching the inner section 119. This increased length of the heat ingress path facilitates the insulating capabilities of the coupling 100.

Thus, the outer flange 115 can be employed to be connected to another outer flange 115 of a corresponding or mating coupling 100. As a mere example, the two outer flanges 115 of both couplings can be fixed to one another with a clamp 190 (illustrated in the cross-sectional view), such as a V-clamp.

Alternatively, the outer flanges 115 can each be a bolted flange (not illustrated in Figure 1), so that the couplings 100 can be fastens to one another using a plurality of bolts.

For increased stability of the coupling 100, the coupling 100 can comprise the tubular portion 110 fitting over the outer wall 60. Such tubular portion 110 can be considered as a part of the outer flange 115 and/or part of the outer section 117. It provides a certain overlap in longitudinal direction with the outer wall 60, so that an optimal position of the coupling 100 at the longitudinal end of the double-walled pipe can be achieved.

When connecting to couplings 100 to one another, one or more seals 241, 242 can be arranged therebetween. For instance, each coupling 100 can include one or more circumferentially arranged grooves 141, 142 configured to receive a respective seal 241, 242. Such seal 241, 242 is squeezed between two corresponding couplings 100, in order to provide a fluid tight inner space in the coupling 100, and particularly a fluid tight space for the passage in the inner section 119. For instance, the coupling 100 can comprise one inner groove 142 at the inner section 119 and one outer groove 141 at the outer section 119 or outer flange 115, each groove 141, 142 being configured to receive a respective seal 241, 242.

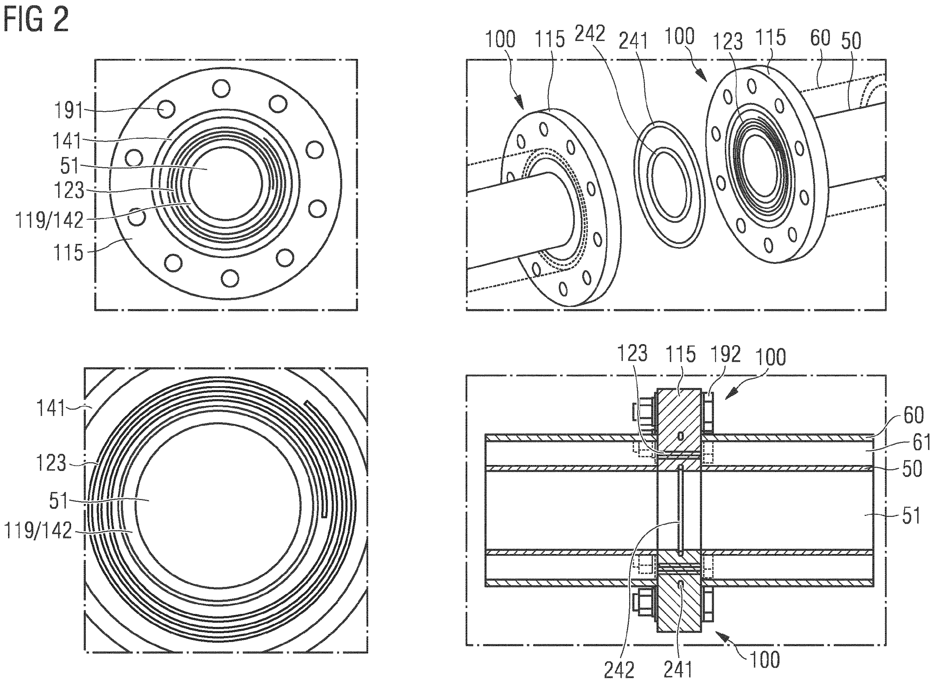

Figure 2 schematically illustrates different views of a second exemplary coupling 100 for a double-walled pipe. The double-walled pipe and a majority of the features of the coupling 100 are identical or at least quite similar to those of the first exemplary coupling 100. Such features common to both couplings 100 are indicated by the same reference numerals, and their description is omitted to avoid redundant disclosure.

The second exemplary coupling 100 has a plurality of through holes 191 in the outer flange 115. Each through hole 191 can be used to put a bolt 192 therethrough, in order to fasten the coupling 100 to a corresponding coupling 100 using the bolt 192 and a corresponding through hole 191.

Furthermore, the material of the outer section 117 is interrupted in the radial direction multiple times. This is achieved by providing one or more pockets including a spiral pocket 123 spiralling around a longitudinal direction of the coupling 100. Figure 2 illustrates only one spiral pocket 123. It is to be understood that an inner pocket 122 and/or an outer pocket 121 (see Figure 1) can optionally be arranged radially inside and outside of the spiral pocket 123, respectively. The illustrated spiral pocket 123 makes more than three turns, i.e. the spiral pocket 123 has a radial length of about 1125°, which is to be understood as a mere example. The heat ingress path is, hence, along the likewise spiral outer section 117 between the outer flange 115 and the inner section 119. This spiral achieves a large increase of the heat ingress path.

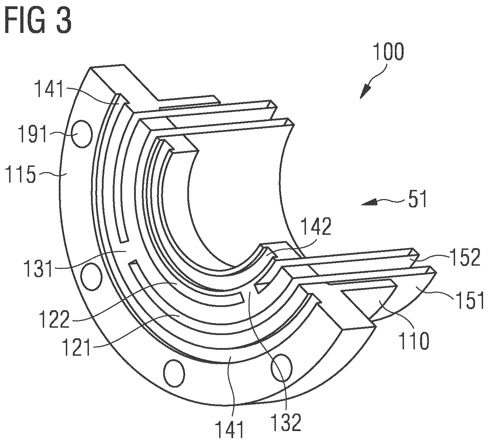

Figure 3 schematically illustrates a perspective view of a cut-out of a third exemplary coupling 100 for a double-walled pipe. The double-walled pipe is not illustrated in Figure 3 for clarity reasons. Again, a majority of the features of the third exemplary coupling 100 are identical or at least quite similar to those of the first exemplary coupling 100. Such features common to both couplings 100 are indicated by the same reference numerals, and their description is omitted to avoid redundant disclosure.

The coupling 100 of Figure 3 includes one or more pockets 121, 122 as well as inner and outer spokes 131, 132. Such pockets 121, 122 provide a fluid connection between opposite sides of the coupling 100 in a longitudinal direction. Thus, as the pockets 121, 122 are arranged in an area corresponding to a radial range between the inner wall 50 and the outer wall 60, the pockets 121, 122 would allow a fluid to pass from the outer lumen 61 to a corresponding outer lumen 61 of a coupled double-walled pipe. In case both outer lumens 61 are applied with a vacuum, the maintaining of the vacuum may be more difficult as the connected (and hence combined) outer lumen 61 is larger.

In case such fluid connection should be avoided, an insulating barrier 151, 152 can be arranged in each of the one or more pockets 121, 122. The insulating barrier 151, 152 can be arranged in the respective pocket 121, 122 in a fluid tight manner, so that any fluid is hindered from passing through the coupling.

As illustrated in Figure 3, such insulating barrier 151, 152 can be made longer in the longitudinal direction than the pockets 121, 122. Thus, a heat ingress path can be extended in the longitudinal direction. As a mere example, the insulating barrier 151, 152 can have a hollow tubular body which is closed at its longitudinal ends. Thus, the heat ingress path has to follow an inner and outer side of the body around the longitudinal end.

It is further to be understood that Figure 3 shows only half of a coupling 100 and, hence only portions of the insulating barriers 151, 152. The insulating barriers 151, 152 are continuing in a circumferential direction until a further spoke 131, 132 is reached, in order to completely close the pocket 121, 122.

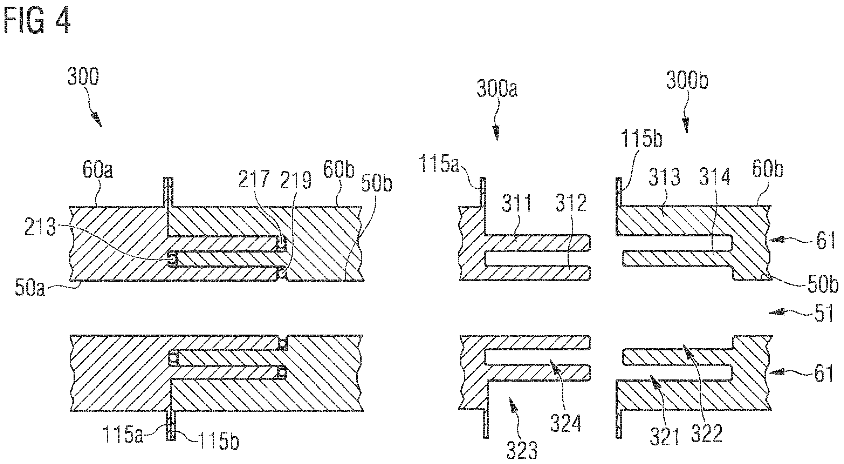

Figure 4 schematically illustrates a cross-sectional view of a fourth exemplary coupling 300 for a double-walled pipe in two states. Actually, a corresponding pair of couplings 300 is illustrated. On the left side, Figure 4 illustrates the coupling 300 in a connected state, while the right side of Figure 4 illustrates the coupling 300 in a dissembled state.

The left coupling 300a comprises interruptions in the material of an outer section 311 in a radial direction, i.e. comprises pockets 323, 324. Likewise, the right coupling 300b comprises interruptions in the material of an outer section 313, 314 in a radial direction, i.e. comprises a pocket 321. When arranged next to each other with a common longitudinal centre axis, the left and right couplings 300a,b have the pockets 321-324 arranged in radially adjacent positions. Thus, each pocket 321, 323 and 324 is configured to receive a corresponding outer section 311, 313 and 314, respectively. In case of the left coupling 300a, an inner section 312 is present, and the right coupling 300b has a corresponding pocket 322.

When put together, i.e. when each inner and outer section 311-314 is received in a corresponding pocket 321-324, the left and right couplings 300a,b can be fastened to one another. As a mere example, corresponding flanges 115a and 115b may be provided, which can be connected by a clamp (not illustrated) or bolts (not illustrated) as in the exemplary couplings 100 of Figures 1 and 2, respectively. In the connected state (left side of Figure 4) a heat ingress path is achieved that meanders from an outer flange 115a,b along the outer and inner sections 311-314 (i.e. along the pockets 321-324).

In order to facilitate a fluid tight connection, one or more seals 213, 217, 219 can be provided. For example, the longitudinal length of a pocket 321-324 can be (slightly) larger than a longitudinal length of the corresponding inner and outer section 311-314. In the remaining space, a corresponding seal 213, 217, 219 can be introduced. Such seal 213, 217, 219 can form a ring, such as seals 241, 242 illustrated in Figures 1 and 2.

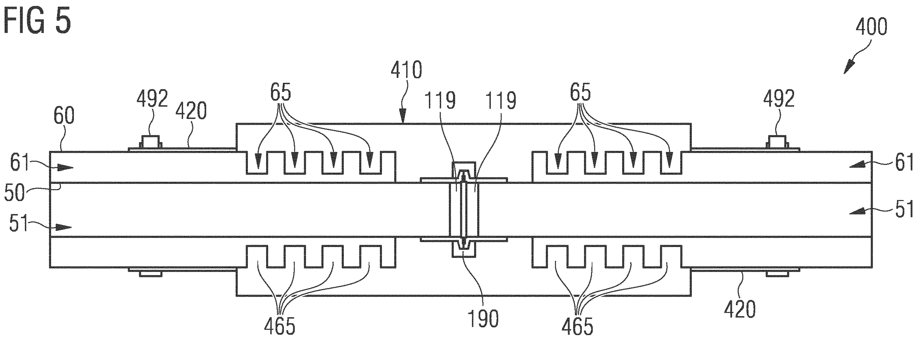

Figure 5 schematically illustrates a cross-sectional view of a fifth exemplary coupling 400 for a double-walled pipe. The double-walled pipe has an inner wall 50 defining an inner lumen 51, and an outer wall 60, which delimits together with the inner wall 50 an outer lumen 61. Thus, the outer lumen 61 encircles the inner wall 50. The inner lumen 51 can be used to hold and conduct a fluid, such as a gas or liquid. The outer lumen 61 is used to provide insulation to the inner wall 50 and inner lumen 51. As a mere example, the inner lumen 51 can be used to transport a very cold fluid, such as liquid hydrogen, which is insulated by a vacuum applied to the outer lumen 61.

In order to connect two double-walled pipes to one another in a longitudinal direction, the coupling 400 comprises a pair of inner couplings 119, each mounted to a respective inner wall 50. Each of the inner couplings 119 can correspond to the inner section of the first to third exemplary couplings 100. The pair of inner couplings 119 is configured to be coupled to one another. As a mere example, the pair of inner couplings 119 can be fixed to one another by a clamp 190 or bolts (not illustrated in Figure 5, but as in Figure 2).

The coupling 400 further comprises a sleeve 410 configured to cover the inner coupling 119, a portion of the inner wall 50 and a portion of the outer wall 60. In other words, the sleeve 410 surrounds circumferentially the pair of inner couplings 119, the inner wall 50 and the outer wall 60, and covers these components also in the longitudinal direction.

In order to have a fluid tight connection between the respective outer lumens 61, the sleeve 410 can comprise an axial extension 420 fitting on the outer wall 60 in a fluid tight manner. This axial extension 420 can be additionally fixed to the outer wall 60 by a clamp 492, ring, collar, bracket or the like. Such axial extension 420 is provided on both the longitudinal ends of the sleeve 410, one for each outer wall 60 of the to-be-connected double-walled pipes.

Furthermore, the outer wall 60 forms a plurality of circumferentially extending pockets 65 wherein each pair of the plurality of pockets 65 is arranged adjacent to one another in an axial direction of the coupling 400. These pockets 65 provide for an increased longitudinal length of the outer wall 60 from the "normal" (cylindrical) section of the pipe towards the inner couplings 119.

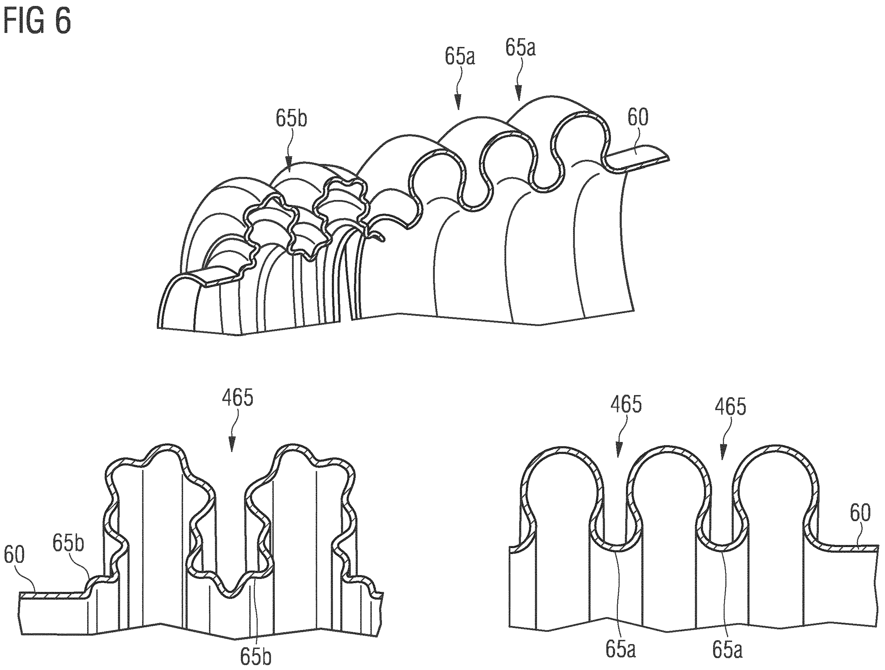

Figure 6 schematically illustrates perspective views and corresponding cross sections of an outer wall 60 at these pockets 65 showing two possible examples of the shape of the outer wall 60. When viewing along a longitudinal direction, a cross-section of at least some of the plurality of pockets 65 can have a rectangular shape 65, an omega-shape 65a, a star shape 65b, a triangular shape, and elliptical shape and/or a polygonal shape. Figure 6 exemplarily illustrates an omega-shape 65a and a star shape 65b, wherein the star shape 65b has rounded corners.

Any of such cross-sectional shapes of the outer wall 60 increase the heat ingress path along the outer wall.

Referring back to Figure 5, the sleeve 410 can be configured to hold a vacuum in a space between the sleeve 410 and the portion of the inner wall 50 and the portion of the outer wall 60 including the pockets 65. For instance, the sleeve 410 can be formed of a material rigid enough to withstand the vacuum (i.e., the outer pressure).

Alternatively or additionally, the sleeve 410 can comprise a plurality of circumferentially extending protrusions 465, each of which fills a pocket 65 of the outer wall 60. In other words, the interior space of the sleeve 410 can be filled with an insulating material, which has radially inwardly extending protrusions 465 filling each pocket 65. Such insulating sleeve 410 may be applied, if a vacuum source cannot be provided or a vacuum cannot be maintained.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

The present disclosure also provides for the following examples:
1. A coupling (100, 300) for a double-walled pipe having an inner wall (50) and an outer wall (60), the inner wall (50) having an inner lumen (51), and the inner wall (50) and the outer wall (60) delimiting an outer lumen (61), the coupling comprising:
   an inner section (119, 312, 314) forming a passage in fluid communication with the inner lumen (51); and
   an outer section (117, 311, 313) arranged radially adjacent to the inner section (119, 312, 314),
   characterised in that
   a material of the outer section (117, 311, 313) is interrupted in a radial direction multiple times in an area corresponding to a radial range between the inner wall (50) and the outer wall (60).
2. The coupling according to example 1, wherein the outer section (117, 311, 313) comprises one or more pockets (121, 122, 123, 321 - 324) forming the interruption of the material of the outer section (117, 311, 313).
3. The coupling according to example 2, wherein the one or more pockets (121, 122, 123, 321 - 324) include an inner pocket (122) and a radially outwardly arranged outer pocket (121), and/or
   wherein the one or more pockets (121, 122, 123, 321 - 324) include a spiral pocket (123) spiralling around a longitudinal direction of the coupling.
4. The coupling according to example 3, wherein two or more inner pockets (122) are arranged adjacent to one another in a circumferential direction, and
   wherein the coupling (100) further comprises:
   at least one inner spoke (132) connecting the inner section (119) with the outer section (117) in a radial direction and separating a pair of the two or more inner pockets (122).
5. The coupling according to example 3 or 4, wherein two or more outer pockets (121) are arranged adjacent to one another in a circumferential direction, and
   wherein the coupling (100) further comprises:
   an outer flange (115); and
   at least one outer spoke (131) connecting the outer section (117) with the outer flange (115) in a radial direction and separating a pair of the two or more outer pockets (121).
6. The coupling according to example 5, when dependent on example 4, wherein the at least one outer spoke (131) is arranged at a circumferential position deviating from a circumferential position of the at least one inner spoke (132).
7. The coupling according to one of examples 2 to 6, further comprising:
   an insulating barrier (151, 152) arranged in each of the one or more pockets (121, 122, 123) in a fluid tight manner.
8. The coupling (300a) according to example 2, wherein the one or more pockets (321 - 324) are configured to receive a corresponding outer section (311 - 314) of a further coupling (300b).
9. The coupling (100, 300) according to one of examples 1 to 8, further comprising:
   a seal (241, 242) arranged at a front face of the coupling and configured to seal the front face of the coupling with a corresponding front face of a further coupling.
10. A coupling (400) for a double-walled pipe having an inner wall (50) and an outer wall (60), the inner wall (50) having an inner lumen (51), and the inner wall (50) and the outer wall (60) delimiting an outer lumen (61), the coupling (400) comprising:
   a pair of inner couplings (119), each mounted to a respective inner wall (50), wherein the pair of inner couplings (119) is configured to be coupled one another; and
   a sleeve (410) configured to cover the inner coupling (119), a portion of the inner wall (50) and a portion of the outer wall (60),
   characterised in that
   the outer wall (60) forms a plurality of circumferentially extending pockets (65), wherein each pair of the plurality of pockets (65) is arranged adjacent to one another in an axial direction of the coupling (400).
11. The coupling (300a) according to example 10, wherein the sleeve (410) comprises an axial extension (420) fitting on the outer wall (60) in a fluid tight manner, and is configured to hold a vacuum and/or an insulation in a space between the sleeve (410) and the portion of the inner wall (50) and the portion of the outer wall (60) including the pockets (65).
12. The coupling (300a) according to example 10, wherein the sleeve (410) comprises a plurality of circumferentially extending protrusions (465), wherein each protrusion (465) fills a pocket (65) of the outer wall (60).
13. The coupling (300a) according to one of examples 10 to 12, wherein a cross-section of at least some of the plurality of pockets (65) has a rectangular shape (465), an omega-shape (465a), a star-shape (465b), a triangular shape, an elliptical shape, and/or a polygonal shape.

## Claims

1. A coupling (400) for a double-walled pipe having an inner wall (50) and an outer wall (60), the inner wall (50) having an inner lumen (51), and the inner wall (50) and the outer wall (60) delimiting an outer lumen (61), the coupling (400) comprising:
a pair of inner couplings (119), each mounted to a respective inner wall (50), wherein the pair of inner couplings (119) is configured to be coupled one another; and
a sleeve (410) configured to cover the inner coupling (119), a portion of the inner wall (50) and a portion of the outer wall (60),
**characterised in that**
the outer wall (60) forms a plurality of circumferentially extending pockets (65), wherein each pair of the plurality of pockets (65) is arranged adjacent to one another in an axial direction of the coupling (400).

2. The coupling (300a) according to claim 1, wherein the sleeve (410) comprises an axial extension (420) fitting on the outer wall (60) in a fluid tight manner, and is configured to hold a vacuum and/or an insulation in a space between the sleeve (410) and the portion of the inner wall (50) and the portion of the outer wall (60) including the pockets (65).

3. The coupling (300a) according to claim 1, wherein the sleeve (410) comprises a plurality of circumferentially extending protrusions (465), wherein each protrusion (465) fills a pocket (65) of the outer wall (60).

4. The coupling (300a) according to one of claims 1 to 3, wherein a cross-section of at least some of the plurality of pockets (65) has a rectangular shape (465), an omega-shape (465a), a star-shape (465b), a triangular shape, an elliptical shape, and/or a polygonal shape.
